# EUROPEAN PATENT APPLICATION

(11) **EP 4 052 589 A1**
(43) Date of publication of application: **07.09.2022**
(21) Application number: 20882257.7
(22) Date of filing: 23.09.2020
(51) Int. Cl.: A23L 2/00, A23L 2/52, A23L 2/54, A23L 2/56

(54) **NON-ALCOHOLIC BEER-LIKE BEVERAGE**

(30) Priority: 28.10.2019 JP 2019195375
(71) Applicant: Suntory Holdings Limited, Osaka 530-8203 (JP)
(72) Inventor: SHIMMURA, Anna, Fuchu-shi, Tokyo 183-8533 (JP); KATO, Yuichi, Fuchu-shi, Tokyo 183-8533 (JP)
(74) Representative: Vossius & Partner Patentanwälte Rechtsanwälte mbB
(86) International application number: PCT/JP2020/035733
(87) International publication number: WO 2021/084975

(57) **Abstract**

Given the demand for a non-alcoholic beer-like beverage that goes down more smoothly in the throat, the present invention provides a non-alcoholic beer-like beverage containing isoamyl propionate.

## Description

### Technical Field

The present invention relates to a non-alcoholic beer-taste beverage.

### Background of Art

As beer-taste beverages manufactured by using water and malt as part of raw materials, non-alcoholic beer-taste beverages which have an alcohol by volume of less than 1 (v/v)% and are beer-flavored carbonated beverages have been distributed on the market, and various developments have been carried out.

For example, Patent Literature 1 discloses technology relating to a method for producing a non-alcoholic fermented beverage, which can reduce a concentration of produced alcohol by about 40 to 55% as compared with conventional methods, by adding α-glucosidase before a fermentation step in beer manufacturing.

### Citation List

### Patent Literature

Patent Literature 1: JP-A-H05-68528

### Summary of Invention

### Technical Problem

The general non-alcoholic beer-taste beverages manufactured by the method as described in Patent Literature 1 often are insufficient in pleasing throat feel, as compared with ordinary beers. Therefore, a non-alcoholic beer-taste beverage with an improved pleasing throat feel has been required.

### Solution to Problem

The present invention provides a non-alcoholic beer-taste beverage comprising isoamyl propionate. More specifically, the present invention includes the following aspects of the invention.
[1] A non-alcoholic beer-taste beverage comprising isoamyl propionate.
[2] The non-alcoholic beer-taste beverage according to [1], wherein the isoamyl propionate has a content (X) of 1900 ppb by mass or less based on the non-alcoholic beer-taste beverage.
[3] The non-alcoholic beer-taste beverage according to [1] or [2], further comprising tartaric acid.
[4] The non-alcoholic beer-taste beverage according to [3], wherein the tartaric acid has a content (Y) of 5 to 280 ppm by mass based on the non-alcoholic beer-taste beverage.
[5] The non-alcoholic beer-taste beverage according to [3] or [4], wherein a ratio [(X)/(Y)] of the content (X) of the isoamyl propionate (unit: ppb by mass) to the content (Y) of the tartrate acid (unit: ppm by mass) is 0.01 to 500.
[6] The non-alcoholic beer-taste beverage according to any one of [1] to [5], wherein the non-alcoholic beer-taste beverage has an alcohol by volume of less than 1 (v/v)%.
[7] The non-alcoholic beer-taste beverage according to any one of [1] to [6], wherein the non-alcoholic beer-taste beverage has a carbon dioxide gas pressure of 5.0 kg/cm² or less.
[8] The non-alcoholic beer-taste beverage according to any one of [1] to [7], wherein the non-alcoholic beer-taste beverage is a non-fermented beverage.

### Advantageous Effects of Invention

The non-alcoholic beer-taste beverage according to one preferred aspect of the present invention can be a beverage having a good pleasing throat feel.

### Description of Embodiments

### 1. Non-alcoholic beer-taste beverage

As used herein, the "non-alcoholic beer-taste beverage" refers to a carbonated beverage having a beer-like flavor not belonging to "alcoholic beverages" defined in The Notification of Interpretation of the Liquor Tax Law and the Liquor Administration-related Laws and Regulations, which has been effective as of April 1, 2018 (30^{th} year of the Heisei period).

The alcohol by volume of the non-alcoholic beer-taste beverage according to one embodiment of the present invention may be less than 1 (v/v%), but is preferably less than 0.5 (v/v)%, more preferably less than 0.1 (v/v)%, still more preferably less than 0.01 (v/v)%, and even still more preferably less than 0.005 (v/v)%.

In the present description, the alcohol by volume is denoted as a volume/volume-based percentage (v/v%). Moreover, the alcohol content of beverage can be measured by any known method, for example, by a mechanical oscillator densitometer.

The non-alcoholic beer-taste beverage according to one embodiment of the present invention may be a fermented beverage obtained by removing alcohol generated in a fermentation step after undergoing the fermentation step using yeast (top fermentation yeast or bottom fermentation yeast) in a production step or may be a non-fermented beverage prepared without via such a fermentation step.

In the case of the non-alcoholic beer-taste beverage according to one embodiment of the present invention being a non-fermented beverage, carbonated beverages adjusted to have a beer flavor are also included in the non-fermented non-alcoholic beer-taste beverage according to one embodiment of the present invention, which are obtained by adding a beer flavoring agent including esters or higher alcohols (for example, isoamyl acetate, ethyl acetate, n-propanol, isobutanol, acetaldehyde, ethyl caproate, linalool, and 4-vinylguaiacol) so as to have a beer-like flavor.

In addition, the non-alcoholic beer-taste beverage according to one embodiment of the present invention may be a malt-based non-alcoholic beer-taste beverage using malt as a raw material, or a malt-free non-alcoholic beer-taste beverage without using malt. However, the malt-based non-alcoholic beer-taste beverage is preferred, and a molt-based non-alcoholic beer-taste beverage using barley malt is more preferred.

Such a general non-alcoholic beer-taste beverage has a low alcohol by volume and is likely to have an insufficient pleasing throat feel. In response to these problems, it was found that a beverage comprising isoamyl propionate can have an improved pleasing throat feel, compared to conventional non-alcoholic beer-taste beverages. The present invention has been accomplished based on these findings.

In the non-alcoholic beer-taste beverage according to one aspect of the present invention, the content (X) of isoamyl propionate is, from the viewpoint of allowing the beverage to have an improved pleasing throat feel, preferably 1 ppb by mass or more, more preferably 5 ppb by mass or more, more preferably 15 ppb by mass or more, more preferably 20 ppb by mass or more, still more preferably 30 ppb by mass or more, still more preferably 40 ppb by mass or more, even still more preferably 55 ppb by mass or more, particularly preferably 70 ppb by mass or more, and more particularly preferably 100 ppb by mass, and preferably 1900 ppb by mass or less, more preferably 1800 ppb by mass or less, more preferably 1700 ppb by mass or less, more preferably 1600 ppb by mass or less, still more preferably 1400 ppb by mass or less, still more preferably 1300 ppb by mass or less, even still more preferably 1200 ppb by mass or less, particularly preferably 1100 ppb by mass or less, and more particularly preferably 1000 ppb by mass or less, based on the total amount (100% by mass) of the non-alcoholic beer-taste beverage, and in addition to these, it is preferably 1 to 1900 ppb by mass, more preferably 5 to 1800 ppb by mass, more preferably 15 to 1700 ppb by mass, more preferably 20 to 1600 ppb by mass, still more preferably 30 to 1400 ppb by mass, still more preferably 40 to 1300 ppb by mass, even still more preferably 55 to 1200 ppb by mass, particularly preferably 70 to 1100 ppb by mass, and more particularly preferably 100 to 1000 ppb by mass.

Moreover, the content (X) of isoamyl propionate may be 120 ppb by mass or more, 150 ppb by mass or more, 180 ppb by mass or more, 200 ppb by mass or more, 220 ppb by mass or more, 250 ppb by mass or more, 280 ppb by mass or more, 300 ppb by mass or more, 320 ppb by mass or more, 350 ppb by mass or more, or 380 ppb by mass or more, and 900 ppb by mass or less, 850 ppb by mass or less, 800 ppb by mass or less, 750 ppb by mass or less, 700 ppb by mass or less, 650 ppb by mass or less, 600 ppb by mass or less, 550 ppb by mass or less, or 500 ppb by mass or less, based on the total amount (100% by mass) of the non-alcoholic beer-taste beverage.

It is noted that in the present description, the content (X) of the isoamyl propionate can be measured by a gas chromatography-mass spectrometry (GC/MS). A specific measurement method is, for example, a measurement method using the following samples under the following measurement conditions.

### [Sample]

To 10 to 20 g of a beverage to be measured, 150 mL of water and 4 mL of heptane are added to prepare a solution. Then, after the solution is distilled for 90 minutes by using a distillation apparatus for essential oil quantification, 1 µL of the heptane layer is injected into the GC/MS apparatus described below to carry out measurement.

### [Measurement conditions]

- GC/MS apparatus: 7890B/5977B (manufactured by Agilent Technologies, Inc.)
- Column: DB-WAX (manufactured by Agilent Technologies, Inc.), diameter of 0.25 mm × 30 m, film thickness of 0.25 µm
- Introduction system: Split 5: 1
- Injection volume: 1 µL
- Sample inlet temperature: 220°C
- Column temperature: 40°C (holding for 1 minute) → temperature rise to 160°C at 10°C/min → temperature rise to 200°C at 15°C/min
- Gas flow rate: 1 mL/min of helium (carrier gas)
- Ion source temperature: 230°C
- Ionization method: EI

The non-alcoholic beer-taste beverage of one aspect of the present invention preferably further contains tartaric acid. Containing tartaric acid together with isoamyl propionate allows a non-alcoholic beer-taste beverage to be excellent in aftertaste is sharpness in addition to a good pleasing throat feel.

In the non-alcoholic beer-taste beverage of one aspect of the present invention, the content (Y) of tartaric acid is, from the viewpoint of allowing the beverage to be excellent in the aftertaste is sharpness and to suppress aftertaste is unpleasant astringency, preferably 5 to 280 ppm by mass, more preferably 7 to 250 ppm by mass, still more preferably 8 to 230 ppm by mass, even still more preferably 10 to 200 ppm by mass, particularly preferably 12 to 180 ppm by mass, and more particularly preferably 15 to 150 ppm by mass, based on the total amount (100% by mass) of the non-alcoholic beer-taste beverage.

Moreover, the content (Y) of tartaric acid may be 20 ppm by mass or more, 25 ppm by mass or more, 30 ppm by mass or more, 35 ppm by mass or more, or 40 ppm by mass or more, based on the total amount (100% by mass) of the non-alcoholic beer-taste beverage, and it may be 120 ppm by mass or less, 100 ppm by mass or less, 80 ppm by mass or less, 70 ppm by mass or less, or 60 ppm by mass or less.

In the present description, the content (Y) of tartaric acid can be measured by the method described in Journal of Food Science and Technology, 52(3): 1414-1423., 2015.

In the non-alcoholic beer-taste beverage of one aspect of the present invention, the ratio [(X)/(Y)] of the content (X) of isoamyl propionate (unit: ppb by mass) to the content (Y) of tartaric acid (unit: ppm by mass) is, from the viewpoint of allowing the beverage to be excellent in aftertaste is sharpness and to suppress aftertaste is unpleasant astringency, in addition to a good pleasing throat feel, preferably 0.01 to 500, more preferably 0.02 to 400, more preferably 0.03 to 300, still more preferably 0.05 to 200, even still more preferably 0.1 to 150, particularly preferably 0.5 to 100, and more particularly preferably 1 to 50.

Further, the ratio [(X)/(Y)] of the content (X) of isoamyl propionate (unit: ppb by mass) to the content (Y) of tartaric acid (unit: ppm by mass) may be 2.0 or more, 3.0 or more, 4.0 or more, 4.5 or more, 5.0 or more, 5.5 or more, 6.0 or more, or 6.5 or more, and 45 or less, 40 or less, 35 or less, 30 or less, 25 or less, 20 or less, 18 or less, or 15 or less.

The pH of the non-alcoholic beer-taste beverage according to one embodiment of the present invention is not particularly limited, but is preferably less than 4.0, and preferably 2.0 or higher from the viewpoint of inhibiting generation of microorganisms and improving flavor.

The total amount of extract of the non-alcoholic beer-taste beverage according to one embodiment of the present invention is not particularly limited, but is preferably 1.5% by weight or less, more preferably 1.1% by weight or less, still more preferably 0.80% by weight or less, and even still more preferably less than 0.50%, from the viewpoint of providing a beverage with a light taste.

As used herein, the "total amount of extract" is an extract value (% by mass) of a degassed sample, measured according to "Beer analysis method 7.2 Extract" of the revised BCOJ Beer Analysis Method edited by the Brewers Association of Japan, the Brewery Convention of Japan (BCOJ) (published by the Brewing Society of Japan, revised in 2013).

The color of the non-alcoholic beer-taste beverage according to one embodiment of the present invention is not particularly limited, but may be amber or golden like ordinary beer, black like black beer, or colorless and transparent, or a desired color may be imparted by adding a colorant, etc. The color of the beverage can be discriminated with a naked eye, but may be defined by a total light transmittance, chromaticity, etc.

The non-alcoholic beer-taste beverage according to one embodiment of the present invention may be in any form in which the beverage is packed in a container, and examples of the container include bottles, PET bottles, cans, and barrels, but the container is preferably a can, a bottle, or a PET bottle particularly from the viewpoint of portability.

### 1.1 Raw materials

As the main raw material of the non-alcoholic beer-taste beverage according to one embodiment of the present invention, malt may be used together with water, or malt may not be used. Further, a hop may be used, and in addition thereto, a preservative, a sweetener, water-soluble dietary fibers, a bittering agent or bitterness-imparting agent, an antioxidant, a flavoring agent, an acidulant, etc. may be used.

When malts are used as raw material, the malts refer to those obtained by germinating seeds of wheat-family grains such as barley, wheat, rye, Avena fatua, oats, adlay, and Avena sativa, subjecting the germinated seeds to drying, and removing the roots, and they may be from any production area and of any cultivar.

In one embodiment of the present invention, barley malt is preferably used. The barley malt is one of the malts most commonly used as raw materials of beer-taste beverages in Japan. There are various types of barleys such as two-row barley and six-row barley, but any of them may be used. Further, in addition to usual malts, colored malts, etc. can also be used. When the colored malts are used, different types of colored malts may be appropriately combined for use, or one type of colored malt may be used.

Moreover, grains other than malts may be used together with malt.

Examples of such grains include wheat-family grains other than malts (barley, wheat, rye, Avena fatua, oats, adlay, Avena sativa, etc.), rice (polished rice, brown rice, etc.), corn, kaoliang, potato, bean (soybean, pea, etc.), buckwheat, sorghum, foxtail millet, barnyard millet, and starch obtained therefrom, and extracts thereof (extracts, etc.).

When malt is not used, a non-alcoholic beer-taste beverage using liquid sugar containing a carbon source and a nitrogen source as an amino acid-containing material (for example, soybean protein), such as the aforementioned grains other than malt, is included.

Examples of the hops used in one embodiment of the present invention include those in the form of pellet hop, powdered hop, and hop extract. Moreover, as the hops to be used, a processed hop product such as isomerized hop or reduced hop may be used.

The amount of hop added is appropriately adjusted, but is preferably 0.0001 to 1% by mass with respect to the total amount of the beverage.

Moreover, a non-alcoholic beer-taste beverage using a hop as a raw material is a beverage that contains iso-α-acid, which is a component derived from the hop. The content of iso-α-acid in the non-alcoholic beer-taste beverage using a hop may be more than 0.1 ppm by mass, or more than 1.0 ppm by mass based on the total amount (100% by mass) of the beer-taste beverage.

On the other hand, the content of iso-α-acid in a non-alcoholic beer-taste beverage that does not use a hop may be 0.1 ppm by mass or less based on the total amount (100% by mass) of the beer-taste beverage.

As used herein, the content of iso-α-acid is a value measured by a high performance liquid chromatography (HPLC) analysis method described in the revised BCOJ Beer Analysis Method (published by the Brewing Society of Japan, edited by the Brewers Association of Japan, the Brewery Convention of Japan (Technical Committee), and revised in 2013).

The non-alcoholic beer-taste beverage according to one aspect of the present invention may be a beverage further compounding a preservative.

Examples of the preservative used in one embodiment of the present invention include benzoic acid; benzoate such as sodium benzoate; benzoic acid ester such as propyl paraoxybenzoate and butyl paraoxybenzoate; and dimethyl dicarbonate. Moreover, as the preservative, a commercial product such as Strong SANPRESER (manufactured by San-Ei Gen F.F.I., Inc., a mixture of sodium benzoate and butyl benzoate) may be used.

These preservatives may be used singly or in combinations of two or more.

When the preservative is included in the non-alcoholic beer-taste beverage according to one embodiment of the present invention, the content of the preservative is preferably 5 to 1200 ppm by mass, more preferably 10 to 1100 ppm by mass, still more preferably 15 to 1000 ppm by mass, and even still more preferably 20 to 900 ppm by mass.

The non-alcoholic beer-taste beverage according to one aspect of the present invention may be a beverage further compounding a sweetener.

Examples of the sweetener include commercially available saccharification liquids obtained by decomposing starch derived from grains by acid or an enzyme, etc., saccharides such as commercially available starch syrup, saccharides of trisaccharides or higher, sugar alcohols, natural sweeteners such as stevia, and artificial sweeteners.

These sweeteners may be used singly or in combinations of two or more.

These saccharides may be in any form, for example, liquids such as a solution or solids such as a powder.

Moreover, there is no specific limitation also on the types of raw material grain of starch, the method for refining starch, and the conditions of treatment such as hydrolysis with an enzyme or acid. For example, saccharides that is increased in the ratio of maltose by appropriately setting the conditions for hydrolysis with an enzyme or acid, may be used. In addition thereto, sucrose, fructose, glucose, maltose, trehalose, maltotriose, and solutions thereof (saccharide solutions), etc. can also be used.

Moreover, examples of the artificial sweeteners include aspartame, acesulfame potassium (acesulfame K), and sucralose.

The non-alcoholic beer-taste beverage according to one aspect of the present invention may be a beverage further compounding water-soluble dietary fibers.

Examples of the water-soluble dietary fiber include indigestible dextrin, polydextrose, a guar gum decomposition product, pectin, glucomannan, alginic acid, laminarin, fucoidin, and carrageenan, and from the viewpoint of versatility such as stability and safety, indigestible dextrin or polydextrose is preferred.

Types of these water-soluble dietary fibers may be used singly or in combinations of two or more.

In the non-alcoholic beer-taste beverage according to one aspect of the present invention, bitterness is preferably imparted by a hop, etc., and bittering agents or bitterness-imparting agents may be used together with the hop or instead of the hop.

The bittering agent or bitterness-imparting agent is not particularly limited, an agent that is used for ordinary beer or low-malt beer as the bitterness-imparting agent, can be used and examples thereof include rosemary, Ganoderma lucidum, caraway, Juniper rigida, sage, rosemary, Ganoderma lucidum Karsten, laurel, quassin, caffeine, absinthin, naringin, a citrus extract, a Picrasma quassioides wood extract, a coffee extract, a tea extract, a bitter melon extract, a lotus embryo extract, an Aloe arborescens extract, a rosemary extract, a Ganoderma lucidum extract, a laurel extract, a sage extract, and a caraway extract.

These bittering agents or bitterness-imparting agents may be used singly or in combinations of two or more.

The non-alcoholic beer-taste beverage according to one embodiment of the present invention may be a beverage further compounding an antioxidant.

The antioxidant is not particularly limited, and those used as antioxidants in ordinary beer and low-malt beer can be used, and examples of the antioxidant include ascorbic acid, erythorbic acid, and catechin.

These antioxidants may be used singly or in combinations of two or more.

The non-alcoholic beer-taste beverage according to one embodiment of the present invention may be a beverage further compounding a flavoring agent.

The flavoring agent is not particularly limited, and a general beer flavoring agent can be used. A beer flavoring agent is used for beer-like flavor.

Examples of the beer flavoring agent include esters and higher alcohols, and specifically include ethyl acetate, isoamyl acetate, n-propanol, isobutanol, and acetaldehyde.

These flavoring agents may be used singly or in combinations of two or more.

The non-alcoholic beer-taste beverage according to one aspect of the present invention may a beverage further compounding an acidulant.

The acidulant is preferably the aforementioned tartaric acid, however, is not particularly limited provided that it is a substance having acidity other than tartaric acid, and examples thereof include phosphoric acid, citric acid, gluconic acid, lactic acid, malic acid, phytic acid, acetic acid, succinic acid, glucono-delta-lactone, and salts thereof.

Among these acidulants other than the tartaric acid, at least one selected from phosphoric acid, citric acid, gluconic acid, lactic acid, malic acid, phytic acid, acetic acid, succinic acid and salts thereof is preferred, at least one selected from phosphoric acid, citric acid, lactic acid, acetic acid and salts thereof is more preferred, and at least one selected from phosphoric acid and lactic acid is still more preferred.

Moreover, the acidulant used in one aspect of the present invention is preferably a combination of tartaric acid, phosphoric acid, and lactic acid.

These acidulants may be used singly or in combination of two or more.

In the non-alcoholic beer-taste beverage of one aspect of the present invention, the total content of acidulants other than tartaric acid may be 0 to 500 parts by mass, 0 to 400 parts by mass, 0 to 300 parts by mass, 0 to 200 parts by mass, 0 to 100 parts by mass, 0 to 50 parts by mass, 0 to 20 parts by mass, 0 to 10 parts by mass, 0 to 5 parts by mass, 0 to 1 part by mass, 0 to 0.1 parts by mass, or 0 to 0.01 parts by mass, with respect to 100 parts by mass of the total amount of the tartaric acid contained in the non-alcoholic beer-taste beverage.

The non-alcoholic beer-taste beverage according to one embodiment of the present invention may be a beverage containing one or more wood extracts selected from beech, cedar, cherry, apple, and walnut, a beverage substantially containing no such extracts, or a beverage containing no such extracts.

The non-alcoholic beer-taste beverage according to one embodiment of the present invention may be a beverage containing an extract of a plant belonging to the genus Quercus of the family Fagaceae, a beverage containing substantially no such extract, or a beverage containing no such extract.

In the present description, for example, the provision that "substantially does not contain component X" is a provision that denies an aspect of allowing component X to be contained for a predetermined purpose and is not a provision that denies an aspect of component X being unintentionally or unavoidably contained. However, a content of component X when provided as "substantially does not contain component X", is preferably as small as possible, and specifically, it is usually less than 10 parts by mass with respect to 100 parts by mass of the total amount of isoamyl propionate contained in the non-alcoholic beer-taste beverage, but it may be less than 5 parts by mass, less than 1 part by mass, less than 0.1 parts by mass, less than 0.01 parts by mass, less than 0.001 parts by mass, or less than 0.0001 parts by mass.

The non-alcoholic beer-taste beverage according to one embodiment of the present invention may be a beverage having a spilanthol content of 0.1 ppb by mass or more, or a beverage having a spilanthol content of less than 0.1 ppb by mass.

### 1.2 Carbon dioxide gas

Carbon dioxide gas contained in the non-alcoholic beer-taste beverage according to one embodiment of the present invention may be added by mixing with carbonated water, or carbon dioxide gas may be added directly to a raw material liquid.

An amount of carbon dioxide gas contained in the beer-taste beverage is represented by a carbon dioxide gas pressure of the beverage but is not particularly limited as long as the effect of the present invention is not avoided. Typically, an upper limit of the carbon dioxide gas pressure of the beverage is 5.0 kg/cm², 4.5 kg/cm², or 4.0 kg/cm², and a lower limit thereof is 0.20 kg/cm², 0.50 kg/cm², or 1.0 kg/cm², and any of these upper and lower limits may be combined. For example, the carbon dioxide gas pressure of the beverage may be 0.20 kg/cm² or more and 5.0 kg/cm² or less, 0.50 kg/cm² or more and 4.5 kg/cm² or less, or 1.0 kg/cm² or more and 4.0 kg/cm² or less.

As used herein, the gas pressure refers to a gas pressure in a container except for special cases.

The pressure can be measured by a method well known to a person skilled in the art, such as a method including fixing a sample set at 20°C, to a gas internal pressure meter, then opening a stopcock of the gas internal pressure meter once to degas the sample, closing the stopcock again, shaking the gas internal pressure meter, and reading the value when the needle reaches a fixed position, or by using a commercially available gas pressure measurement apparatus.

### 1.3 Other additives

The non-alcoholic beer-taste beverage according to one embodiment of the present invention may contain various additives as needed, provided that the effect of the present invention is not hindered.

Examples of such additives include a colorant, a foaming agent, a fermentation accelerator, a yeast extract, a protein-based substance such as a peptide-containing substance, and a seasoning agent such as amino acid.

The colorant is used to impart a beer-like color to the beverage, and a caramel pigment, etc., can be used. The foaming agent is used to form beer-like foam in a beverage or to retain foam of a beverage, and plant-extracted saponin-based substances such as soybean saponin and Quillaja saponin, plant proteins such as corn and soybean, and peptide-containing substances such as collagen peptides, yeast extracts, etc. can be appropriately used.

The fermentation accelerator is used to accelerate fermentation due to yeast, and for example, yeast extracts, bran components such as rice and wheat-family grains, vitamins, and minerals can be used singly or in combination.

### 2. Method for producing non-alcoholic beer-taste beverage

The method for producing a non-alcoholic beer-taste beverage of the present invention is not particularly limited, and examples of the method include a method comprising the following steps (1) to (3).
- Step (1): A step of carrying out at least one of saccharification treatment, boiling treatment, and solid content removal treatment by using various raw materials to obtain a pre-beverage liquid.
- Step (2): A step of adding carbon dioxide gas to the pre-beverage liquid.
- Step (3): A step of adjusting the content (X) of isoamyl propionate.

Moreover, in the production method according to one embodiment of the present invention, the following step (4) may be further comprised, if necessary. - Step (4): A step of adjusting the content (Y) of tartaric acid.

Each of the aforementioned steps will be described below.

### <Step (1)>

Step (1) is a step of carrying out at least one of saccharification treatment, boiling treatment, and solid content removal treatment by using various raw materials to obtain a pre-beverage liquid.

For example, when malt is used as one of various raw materials, various raw materials including water and malt are placed in a charging kettle or a charging tank, and an enzyme such as amylase is added when needed. As various raw materials other than the malt, a hop, dietary fibers, a sweetener, an antioxidant, a bitterness-imparting agent, a flavoring agent, an acidulant, a colorant, etc. may be added.

The mixture of various raw materials is heated to saccharify starch of raw materials for saccharification treatment. The temperature and time of the saccharification treatment are appropriately adjusted according to the type of malt used, the malt ratio, raw materials other than water and malt, etc. After the saccharification treatment, filtration is carried out to obtain a saccharification solution.

This saccharification solution is preferably subjected to boiling treatment.

When the hop, the bittering agent, etc. are used as raw materials, they are preferably added in this boiling treatment. The hop, the bittering agent, etc. may be added between the start of boiling and the end of boiling of the saccharification solution.

After completion of the boiling treatment, preferably the resultant is transferred to a whirlpool, cooled to 0 to 10°C to obtain a cooled liquid, and then solid content removal treatment is carried out in order to remove a solid content such as coagulated protein. The pre-beverage liquid is obtained in such a manner.

Instead of the aforementioned saccharification solution, a pre-beverage liquid may be prepared by adding warm water to a malt extract and adding a hop, a bittering agent, etc., to carry out boiling treatment.

Moreover, when malt is not used as one of the various raw materials, a liquid sugar containing a carbon source, a nitrogen source as an amino acid-containing raw material other than a wheat-family grain or malt, a hop, dietary fibers, a sweetener, an antioxidant, a bitterness-imparting agent, a flavoring agent, an acidulant, a colorant, etc. may be mixed with warm water to prepare a solution of liquid sugar, and the solution of liquid sugar may be boiled to prepare a pre-beverage liquid.

When a hop is used, it may be added before the boiling treatment, or may be added between the start of boiling and the end of boiling of the solution of liquid sugar.

After step (1), a fermentation step using yeast (top fermentation yeast or bottom fermentation yeast) may be carried out to remove alcohol generated in the fermentation step, and a step of preparing a fermented beverage having an alcohol by volume of less than 1 (v/v)% (preferably less than 0.5 (v/v)%, more preferably less than 0.1 (v/v)%, still more preferably less than 0.01 (v/v)%, and even still more preferably less than 0.005 (v/v)%) to produce a non-alcoholic beer-taste beverage.

On the other hand, in the production method according to one embodiment of the present invention, the fermentation step and the step of removing alcohol may not be carried out.

### <Step (2)>

Step (2) is a step of adding carbon dioxide gas to the pre-beverage liquid.

As the method for adding carbon dioxide gas, a publicly known method applied when a carbonated beverage is produced can be employed, and for example, the carbon dioxide gas may be added by mixing the pre-beverage liquid obtained in step (1) with carbonated water, or it may be added directly to the pre-beverage liquid. By employing such a method, the carbon dioxide gas pressure is preferably adjusted to be within the above range.

### <Step (3) and Step (4)>

Step (3) is a step of adjusting the content (X) of isoamyl propionate, and step (4) is a step of adjusting the content (Y) of tartaric acid.

Step (3) and step (4) may be carried out before or after the saccharification treatment, before or after the boiling treatment, or before or after the solid content removal treatment of step (1), or may be carried out before or after step (2) after completion of step (1). However, from the viewpoint of accurately adjusting the content in the beverage finally produced, steps (3) and (4) are preferably carried out after completion of step (1) and before the start of step (2).

It is noted that the order of steps (3) and (4) is not particularly limited, and either step may be carried out first.

In step (3), the content (X) of isoamyl propionate in a beverage before adjustment is preferably measured, and isoamyl propionate is added based on the measured value, or the content (X) is preferably adjusted by adding water for dilution so as to be within the above range of the content (X). If the content (X) is already within the desired range due to the presence of isoamyl propionate derived from the raw material in the beverage before adjustment, it is not necessary to add the isoamyl propionate or to add water for dilution in the step.

Further, in step (4) as in step (3) as well, the content (Y) of tartaric acid in a beverage before adjustment is preferably measured and tartaric acid is added based on the measured value, or the content (Y) is preferably adjusted by adding water for dilution so as to be within the above range of the content (Y). If the content (Y) is already within a desired range due to the presence of tartaric acid derived from the raw materials in the beverage before adjustment, it is not necessary to add tartaric acid or add water to dilute the beverage in this step.

After these steps, steps which are carried out in production of non-alcoholic beer-taste beverages and are well known to a person skilled in the art, such as a liquor storage step and a filtration step, may be carried out.

The non-alcoholic beer-taste beverage according to one embodiment of the present invention thus obtained is filled in a predetermined container and distributed as a product on the market.

A method for packing the beverage in a container is not particularly limited, and a method for packing a beverage in a container that is well known to a person skilled in the art can be employed. By the step of packing the beverage in a container, the non-alcoholic beer-taste beverage of the present invention is filled and sealed in a container. A container of any form and material may be used in the step of packing the beverage in a container, and examples of the container are as described above.

### Examples

Hereinafter, the present invention will be described in more detail with reference to Examples, but the present invention is not limited to these Examples.

### Examples 1 to 12 and Comparative Example 1

By using water, malt, a hop, and acidulants (lactic acid, phosphoric acid) as raw materials, adding isoamyl propionate and tartaric acid so as to have the contents as shown in Tables 1 to 3, to the wort obtained through saccharification treatment without carrying out a fermentation step using yeast, and adding a carbon dioxide gas, a non-alcoholic beer-taste beverage with a pH of less than 4.0 and an alcohol by volume of less than 1 (v/v)% was prepared. It was prepared without adding isoamyl propionate in Comparative Example 1.

Then, by " pleasing throat feel typical of beer-taste beverages," "aftertaste is sharpness typical of beer-taste beverages," and "presence or absence of aftertaste astringency unsuitable as beer-taste beverages", six panelists trained on a daily basis carried out sensory evaluations of the obtained non-alcoholic beer-taste beverages with scores in 0.5 increments in the range of 3.0 (maximum value) to 1.0 (minimum value) based on the following scoring criteria. For evaluation, samples that meet the following criteria "3.0", "2.5", "2.0", "1.5," and "1.0" were prepared in advance, and uniform criteria were adopted among each panelist. In all of the sensory evaluations in Tables 1 to 3, no difference in the score values of 1.5 or more was confirmed between the panelists for the same beverage. Tables 1 to 3 shows the average scores of the panelists.

### [Scoring criteria for pleasing throat feel typical of beer-taste beverages]

- "3.0": Good pleasing throat feel typical of beer-taste beverages is strongly felt.
- "2.5": Good pleasing throat feel typical of beer-taste beverages is definitely felt.
- "2.0": Good pleasing throat feel typical of beer-taste beverages is felt to some extent.
- "1.5": Good pleasing throat feel typical of beer-taste beverages is not sufficiently felt.
- "1.0": No pleasing throat feel typical of beer-taste beverages is felt.

### [Scoring criteria for aftertaste is sharpness typical of beer-taste beverages]

- "3.0": Good aftertaste is sharpness typical of beer-taste beverages is strongly felt.
- "2.5": Good aftertaste is sharpness typical of beer-taste beverages is definitely felt.
- "2.0": Good aftertaste is sharpness typical of beer-taste beverages is felt to some extent.
- "1.5": Good aftertaste is sharpness typical of beer-taste beverages is not sufficiently felt.
- "1.0": No aftertaste is sharpness typical of beer-taste beverages is felt.

### [Scoring criteria for presence or absence of aftertaste astringency unsuitable as beer-taste beverages]

- "3.0": No aftertaste is unpleasant astringency is felt.
- "2.5": Almost no aftertaste is unpleasant astringency is felt.
- "2.0": Aftertaste is unpleasant astringency is slightly felt.
- "1.5": Aftertaste is unpleasant astringency is not definitely felt.
- "1.0": Aftertaste is unpleasant astringency is strongly felt.

Moreover, from the average scores of the panelists for the three sensory evaluation items described above, comprehensive evaluation of each beer-taste beverage was conducted according to the following evaluation criteria. The results are shown in Tables 1 to 3.

### [Comprehensive evaluation]

- "Good": The average values of the scores by the panelists for the two sensory evaluation items: "pleasing throat feel typical of beer-taste beverages" and "aftertaste is sharpness typical of beer-taste beverages," are 2.0 or more, respectively, and the average value of the score by the panelists for the sensory evaluation item: "presence or absence of aftertaste astringency unsuitable as beer-taste beverages" is 2.5 or more.
- "Poor": At least one of the average values of the scores by the panelists for the two sensory evaluation items: "pleasing throat feel typical of beer-taste beverages" and "aftertaste is sharpness typical of beer-taste beverages," is less than 2.0, and/or the average value of the score by the panelists for the sensory evaluation item: "presence or absence of aftertaste astringency unsuitable as beer-taste beverages" is less than 2.5.

### [Table 1]

**Table 1**

| | | | Comparative Example 1 | Example 1 | Example 2 | Example 3 | Example 4 |
|---|---|---|---|---|---|---|---|
| Content (X) of isoamyl propionate | | ppb by mass | 0 | 10 | 50 | 400 | 1500 |
| Content (Y) of tartaric acid | | ppm by mass | 50 | 50 | 50 | 50 | 50 |
| (X) (ppb by mass)/(Y) (ppm by mass) | | - | 0 | 0.2 | 1 | 8 | 30 |
| Sensory evaluation | Pleasing throat feel typical of beer-taste beverages | | 1.0 | 2.0 | 2.5 | 3.0 | 2.5 |
| | Aftertaste is sharpness of typical of beer-taste beverages | | 2.0 | 3.0 | 3.0 | 3.0 | 2.5 |
| | Presence or absence of aftertaste astringency unsuitable as beer-taste beverages | | 2.5 | 3.0 | 3.0 | 3.0 | 3.0 |
| | Comprehensive evaluation | | Poor | Good | Good | Good | Good |

### [Table 2]

**Table 2**

| | | | Example 5 | Example 6 | Example 7 | Example 8 |
|---|---|---|---|---|---|---|
| Content (X) of isoamyl propionate | | ppb by mass | 10 | 50 | 400 | 1500 |
| Content (Y) of tartaric acid | | ppm by mass | 10 | 10 | 10 | 10 |
| (X) (ppb by mass)/(Y) (ppm by mass) | | - | 1 | 5 | 40 | 150 |
| Sensory evaluation | pleasing throat feel typical of beer-taste beverages | | 2.0 | 2.5 | 3.0 | 2.5 |
| | Aftertaste is sharpness of typical of beer-taste beverages | | 2.0 | 2.0 | 2.0 | 2.0 |
| | Presence or absence of aftertaste astringency unsuitable as beer-taste beverages | | 3.0 | 3.0 | 3.0 | 3.0 |
| | Comprehensive evaluation | | Good | Good | Good | Good |

### [Table 3]

**Table 3**

| | | | Example 9 | Example 10 | Example 11 | Example 12 |
|---|---|---|---|---|---|---|
| Content (X) of isoamyl propionate | | ppb by mass | 10 | 50 | 400 | 1500 |
| Content (Y) of tartaric acid | | ppm by mass | 200 | 200 | 200 | 200 |
| (X) (ppb by mass)/(Y) (ppm by mass) | | - | 0.05 | 0.25 | 2 | 7.5 |
| Sensory evaluation | Pleasing throat feel typical of beer-taste beverages | | 2.0 | 2.5 | 3.0 | 2.5 |
| | Aftertaste is sharpness of typical of beer-taste beverages | | 3.0 | 3.0 | 3.0 | 2.5 |
| | Presence or absence of aftertaste astringency unsuitable as beer-taste beverages | | 2.5 | 2.5 | 2.5 | 2.5 |
| | Comprehensive evaluation | | Good | Good | Good | Good |

From the results of Tables 1 to 3, the non-alcoholic beer-taste beverages of Examples 1 to 12 were beverages having a good pleasing throat feel and a good aftertaste is sharpness, typical of beer-taste beverages, and also suppressed the aftertaste is unpleasant astringency. The non-alcoholic beer-taste beverage of Comparative Example 1 was, on the other hand, a beverage having no pleasing throat feel typical of beer-taste beverages.

## Claims

1. A non-alcoholic beer-taste beverage comprising isoamyl propionate.

2. The non-alcoholic beer-taste beverage according to claim 1, wherein the isoamyl propionate has a content (X) of 1900 ppb by mass or less based on the non-alcoholic beer-taste beverage.

3. The non-alcoholic beer-taste beverage according to claim 1 or 2, further comprising tartaric acid.

4. The non-alcoholic beer-taste beverage according to claim 3, wherein the tartaric acid has a content (Y) of 5 to 280 ppm by mass based on the non-alcoholic beer-taste beverage.

5. The non-alcoholic beer-taste beverage according to claim 3 or 4, wherein a ratio [(X)/(Y)] of the content (X) of the isoamyl propionate (unit: ppb by mass) to the content (Y) of the tartrate acid (unit: ppm by mass) is 0.01 to 500.

6. The non-alcoholic beer-taste beverage according to any one of claims 1 to 5, wherein the non-alcoholic beer-taste beverage has an alcohol by volume of less than 1 (v/v)%.

7. The non-alcoholic beer-taste beverage according to any one of claims 1 to 6, wherein the non-alcoholic beer-taste beverage has a carbon dioxide gas pressure of 5.0 kg/cm² or less.

8. The non-alcoholic beer-taste beverage according to any one of claims 1 to 7, wherein the non-alcoholic beer-taste beverage is a non-fermented beverage.
